# EUROPÄISCHE PATENTSCHRIFT

(11) **EP 2 132 561 B1**
(45) Veröffentlichungstag und Bekanntmachung des Hinweises auf die Patenterteilung: **30.11.2016**
(21) Anmeldenummer: 08734814.0
(22) Anmeldetag: 27.03.2008
(51) Int. Cl.: G01N 29/24, G01N 15/02, G01N 29/22, G01N 21/17

(54) **PHOTOAKUSTISCHER DETEKTOR ZUR MESSUNG VON FEINSTAUB**
PHOTOACOUSTIC DETECTOR FOR MEASURING FINE DUST
DÉTECTEUR PHOTOACOUSTIQUE DESTINÉ À MESURER DES POUSSIÈRES FINES

(30) Priorität: 27.03.2007 DE 102007014519
(43) Veröffentlichungstag der Anmeldung: 16.12.2009
(73) Patentinhaber: Fraunhofer-Gesellschaft zur Förderung der angewandten Forschung e.V., 80686 München (DE)
(72) Erfinder: MIKLOS, Andras, 70499 Stuttgart (DE); ANGSTER, Judit, 70499 Stuttgart (DE)
(74) Vertreter: Dörfler, Michael
(86) Internationale Anmeldenummer: PCT/EP2008/002432
(87) Internationale Veröffentlichungsnummer: WO 2008/116655

(56) Entgegenhaltungen:
- EP-A- 0 213 468
- DE-B3-102005 030 151
- JP-A- 59 126 933
- US-A- 5 178 836
- US-A1- 2006 290 944
- 19000101, 1. Januar 1900 (1900-01-01), XP008093727
- K.P. GURTON, M. FELTON, R. DAHMANI, D. LIGON: "In situ infrared aerosol spectroscopy for a variety of nerve agent simulants using flow-through photoacoustics" APPLIED OPTICS, Bd. 46, Nr. 25, 26. Juni 2007 (2007-06-26), Seiten 6323-6329, XP002486405

## Beschreibung

Die Erfindung betrifft einen photoakustischen Detektor zur Messung von Feinstaub in Gas.

### Stand der Technik

Photoakustische Messverfahren, also Messverfahren bei denen mit einer Lichtquelle die zu untersuchende Substanz, vorzugsweise ein Gas oder ein von einem Gas umgebener Festkörper, bestrahlt wird und durch Absorption erwärmt wird, eignen sich gut für genaue Messungen der Konzentration absorbierender Substanzen. Durch die Erwärmung erfolgt eine Ausdehnung des umgebenden Gases. Erfolgt die Erwärmung und damit die Ausdehnung periodisch, entsteht eine Schallwelle, welche von einem Schalldruckaufnehmer gemessen werden kann.

Die Messung von Feinstaub in der Luft spielt seit Jahren eine Rolle in der Überwachung der Luftqualität. Darüber hinaus werden auch Anstrengungen unternommen, den Feinstaubgehalt von Abgasen, wobei insbesondere der Gehalt an Russpartikeln interessiert, zu bestimmen. Photoakustische Messmethoden sind hierzu seit längerem bekannt. Wegen des erhöhten apparativen Aufwands haben sie sich jedoch in der Vergangenheit nicht durchgesetzt. Hierbei mag eine Rolle spielen, dass bei der Überwachung der Umgebungsluft in der Regel Mittelwerte über längere Zeiträume, etwa Mittelungen über eine halbe Stunde oder eine Stunde gefragt, sind. Hier bietet es sich an, die Luft durch einen Filter zu leiten und dessen Belegung zu messen. Die Möglichkeiten der Automatisierung sind jedoch begrenzt. Bei der Einstellung und Überprüfung von Verbrennungsmotoren beispielsweise interessiert man sich nicht für längere Mittelwerte, sondern für aktuelle Werte. Von entscheidendem Interesse bei der Messung von Feinstaubpartikeln ist auch die Größe der Feinstaubpartikel. Die Größe der Feinstaubpartikel ist für ihre gesundheitsschädigende Wirkung von entscheidender Bedeutung.

Die Eignung des photoakustischen Effekts zur Messung von Feinstaubpartikeln ist bereits durch wissenschaftliche Untersuchungen von A. Petzold, R. Niessner "Photoacoustic sensor for carbon aerosols" nachgewiesen. Entsprechende Geräte können auch kommerziell erworben werden, etwa AVL Micro Soot Sensor, http://www.avl.com. Die Größe der Feinstaubpartikel kann damit jedoch nicht ermittelt werden.

Aus der US, 4,722, 602 ist es bekannt, mit Hilfe einer photoakustischen Messung Partikelgrößen in einer Flüssigkeit zu bestimmen. Dazu wird der erzeugte photoakustische Puls genutzt.

Aus der US 5,178,836 ist es bekannt aus der Amplitude der generierten akustischen Welle auf die Größe von Partikeln, bevorzugt von Partikeln in Flüssigkeiten, zu schließen.

Aus der JP 59126933 ist es bekannt, aus der Intensität und der Phasenverschiebung photoakustisch die Größe von Partikeln in einer Flüssigkeit zu bestimmen

Aus der EP 0 213 468 A ist eine Vorrichtung zur Untersuchung von Partikeln mit photoakustischer Spektroskopie bekannt. Diese enthält eine Lichtquelle zur Erzeugung von Anregungsstrahlen mit einer festgelegten Leistung, einer festgelegten Pulsform und einer festgelegten Wiederholfrquenz. Als Lichquelle kommt ein YAG-Laser in Betracht, dessen Pulslänge im Bereich von 1 ns bis 10 ns liegt.

Aus der US 5,178,836 ist ein Verfahren bekannt, um Partikel zu bestimmen. Dazu werden Schallwellen erfasst, die durch Strahlung auf die Probe erzeugt werden. Dazu wird eine Strahlung mit so hoher Intensität gewählt, dass ein Plasma erzeugt wird. Die beim Zusammenbruch des Plasmas erzeugte Schallwelle kann detektiert werden. Ebenso kann die emittierte elektromagnetische Strahlung ermittelt werden.

### Beschreibung

Aufgabe der vorliegenden Erfindung ist es daher, einen Detektor zu entwickeln, welcher zeitaufgelöste und insbesondere auch größenaufgelöste Messungen von Feinstaubpartikelkonzentrationen in der Luft ermöglicht. Insbesondere soll auch eine Messung im Abgas möglich sein.

Diese Aufgabe wird durch die Vorrichtung und das Verfahren, welche in den unabhängigen Ansprüchen angegeben sind, gelöst. Die Unteransprüche geben vorteilhafte Weiterbildungen an.

Es wurde erkannt, dass ein photoakustischer Detektor zur Messung von Feinstaub in Gas mit einer gepulsten Lichtquelle zur Bereitstellung von Anregungslicht, bei dem durch eine Veränderung der Pulslänge und/oder Pulswiederholfrequenz eine Größenverteilung der Feinstaubpartikel bestimmt werden kann, die vorgenannte Aufgabe löst. Dabei wird die unterschiedliche Wärmekapazität größerer und kleinerer Feinstaubpartikel genutzt. Je größer ein Partikel ist, desto größer sind auch seine Masse und seine Wärmekapazität. Bei einer Anregung mit einem Lichtpuls - in der Regel handelt es sich um Laserpülse - werden zunächst die Partikel durch Absorption von Licht erwärmt. Anschließend geben die Partikel Wärme an die Umgebung ab. Die Erwärmung des umgebenden Gases führt sodann zu einer Ausdehnung, welche eine Druckwelle hervorruft, die als Schall messbar ist. Wegen des Querschnitts und damit der größeren Absorptionsfläche wird in den größeren Partikeln mehr Licht absorbiert und damit mehr Wärme aufgenommen. Da die wirksam absorbierende Fläche etwa mit dem Quadrat des Durchmessers wächst, die Wärmekapazität, welche proportional zur Masse ist, hingegen mit der dritten Potenz des Durchmessers wächst, erfolgt bei größeren Partikeln eine geringere Temperaturerhöhung Insgesamt ist aber wie dargelegt mehr Wärme in den größeren Partikeln gespeichert. Es dauert länger als bei kleineren Partikeln, bis diese Wärme an die Umgebung abgegeben wird. Die zeitliche Differenz zwischen der Dauer des anregenden Pulses und der Dauer des photoakustischen Signals, ist also bei größeren Partikeln größer als bei kleineren Partikeln. Bei einer Erhöhung der Pulsdauer werden alle Partikel stärker erwärmt. Aus dem Vergleich mehrerer photoakustischer Signale bei unterschiedlichen Lichtpulslängen kann somit auf eine Größenverteilung geschlossen werden. Dieser Effekt kann rechnerisch gezeigt und ermittelt werden. In der Praxis ist es jedoch stets vorteilhaft, durch Messung von Referenzproben den jeweiligen Detektor zu kalibrieren.

Auch durch die Änderung der Pulswiederholfrequenz kann die Größenverteilung der Feinstaubpartikel bestimmt werden. Wie dargelegt werden die Partikel bei jedem Puls erwärmt und geben anschließend ihre Wärme an die Umgebung ab. Dabei kühlen sich kleinere Partikel zwischen den einzelnen Anregungspulsen stärker ab als größere Partikel. Da nur die jeweilige Temperaturänderung der Umgebungsluft zum photoakustischen Signal beiträgt, ist das photoakustische Signal größer, wenn die aufgenommene Wärme zwischen den einzelnen Anregungspulsen möglichst vollständig an die Umgebung abgegeben wird. Steigert man die Pulswiederholfrequenz, so können die größeren Partikel ihre Wärme zwischen den einzelnen Anregungspulsen nicht ausreichend an die Umgebungsluft abgeben und tragen somit weniger zum photoakustischen Signal bei. Aus einem Vergleich des gesamten photoakustischen Signals bei größeren und kleineren Pulswiederholfrequenzen kann somit auf die Größenverteilung der detektierten Feinstaubpartikel geschlossen werden. Auch dies kann rechnerisch gezeigt werden. Zur Erzielung genauer Messergebnisse ist es jedoch vorteilhaft, den Detektor mit bekannten Proben zu kalibrieren.

Damit kann auf relativ einfache Weise der Aussagewert von Feinstaubpartikelmessungen erhöht werden, da nun neben einer Aussage zur Konzentration eine Angabe zur Größenverteilung der Partikel enthalten ist. Wie eingangs erwähnt sind die gesundheitsschädigenden Wirkungen der Feinstaubpartikel von ihrer Größe abhängig. Ferner können unterschiedliche Partikelgrößen auch Aufschluss über die Quelle oder die Ursache der Feinstaubbelastung geben.

In einer Weiterbildung ist zusätzlich eine Erfassung des vom Feinstaub gestreuten Anregungslichts möglich. Damit kann unterschieden werden, ob das photoakustische Signal von absorbierenden Gasen stammt, welche das Licht nicht streuen oder von streuenden Partikeln. Ferner ermöglicht die Streulichtmessung die Art des Feinstaubs näher zu bestimmen. So ist beim stark absorbierenden Ruß das photoakustische Signal im Vergleich zum Streulichtsignal höher als etwa bei gering absorbierenden Sand- oder Staubpartikeln. Da die Zusammensetzung des Feinstaubs hinsichtlich der gesundheitsschädigenden Wirkungen von Bedeutung ist, ist diese zusätzliche Aussage von Vorteil.

Um die Messempfindlichkeit zu erhöhen, ist es vorteilhaft, eine optische Multipassanordnung und Mittel zur Konzentration der akustischen Energie vorzusehen. Dies bietet allgemein einen Vorteil, da die Anforderungen an die Empfindlichkeit der Schalldruckaufnehmer begrenzt werden kann. Dafür ist es von Bedeutung, dass durch eine geeignete Konzentration vor allem das Signal und weniger die Hintergrundgeräusche konzentriert werden können. Damit werden Störsignale reduziert. Insbesondere bei Messungen im Abgas kann sich das Problem ergeben, dass die Schalldruckaufnehmer den hohen dort vorherrschenden Temperaturen nicht standhalten. Um eine Anordnung der Schalldrucksensoren im Bereich des heißen Gases zu vermeiden, kann die Konzentration so erfolgen, dass der Bereich maximalen Schalldrucks in einem Bereich liegt, in dem die Temperatur niedriger ist als im zu untersuchenden Gas. So kann etwa die akustische Energie aus einem Abgasstrom herausgelenkt werden und außerhalb des heißen Abgasstroms eine maximale Konzentration des Schalldrucks erreicht werden.

Verwendet man zur Konzentration der akustischen Energie Reflektoren, welche auch zur Konzentration des gestreuten Anregungslicht nutzbar sind, so kann die Zahl der Kosten verursachenden und Wartung verlangenden Einbauten reduziert werden. Zudem ist es ohnehin häufig sinnvoll, den Schalldruck und das gestreute Anregungslicht in ähnlichen Bereichen zu konzentrieren.

In einer bevorzugten Ausführungsform ist es möglich, die Feinstaubpartikel in einem durch den Detektor durchfließenden Gas zu messen. Damit kann etwa Abgas durch den Detektor durchgeleitet werden ohne dass eine umständliche Probenaufbereitung erforderlich wäre. Auch können kontinuierliche Messungen etwa in Abgasanlagen oder Lüftungsanlagen erfolgen.

Bisweilen kann die Konzentration des Schalldrucks und/oder des gestreuten Anregungslicht in einen Bereich, in denen eine niedrigere Temperatur besteht, schwierig sein. Auch kann in diesen Bereichen immer noch eine hohe Temperatur bestehen. Aus diesem Grund ist es vorteilhaft, wenn eine Kühleinrichtung für Sensoren, welche den Schalldruck erfassen können, und/oder für Sensoren, welche das Streulicht erfassen können, vorhanden ist. Hier kann eine Wasserkühlung vorgesehen werden. Auch eine lokale Kühlung durch Peltier-Elemente kann die Temperaturbelastung der Sensoren reduzieren.

Eine weitere Möglichkeit zur Senkung der Temperaturbelastung von Sensoren ist es, eine thermische Entkopplung zwischen dem Bereich der Erzeugung und der Erfassung des akustischen Signals vorzusehen. Hier sind verschiedene Möglichkeiten denkbar.

Besonders günstig ist es, die thermische Entkopplung durch eine schalldurchlässige und/oder lichtdurchlässige Folie zu gewährleisten, welche thermisch isolierend ausgeführt ist. Etwa eine Folie aus Polyimid erfüllt die vorgenannten Anforderungen

Eine robuste und temperaturbeständige Einrichtung zur Erfassung des akustischen Signals ist ein optisches Mikrophon. Bei einer Ausführungsform eines optischen Mikrophons wird das Licht, etwa einer Leuchtdiode, über eine Glasfaser durch ein Linsenarray geführt. Dadurch wird der Lichtstrahl auf eine verspiegelte Membran gelenkt. Wenn nun die Membran schwingt, wie es bei Anregung durch Schall geschieht, verändert sich das Lichtsignal. Ein entfernter, also nicht im Bereich hoher Temperatur angeordneter Photodetektor wandelt das Lichtsignal in elektrische Spannungen um. Damit kann ein Detektor im Bereich normaler Temperaturen aufgestellt werden. Lediglich die vorgenannten optischen Elemente müssen den hohen Temperaturen standhalten. Derartige Mikrophone sind seit längerem bekannt und zunehmend günstig erhältlich.

Eine günstige Anordnung der Sensoren zur Erfassung des akustischen und zur Erfassung des optischen Signals ergibt sich dadurch, dass die Sensoren derart nahe zusammen angeordnet sind, dass bei einer gemeinsamen Konzentration der akustischen Energie und des gestreuten Lichts beide Sensoren im Bereich maximalen Signals angeordnet sind. Dabei ist verständlicherweise unter dem Bereich maximalen Signals nicht exakt der Punkt des lokalen Maximums des Schalldrucks oder des gestreuten Anregungslicht zu verstehen. Es geht lediglich um einen Bereich, in dem ein sehr hohes Signal vorhanden ist, so dass man von einem Bereich maximalen Signals sprechen kann. Auch bei Signalen bis zu 20% unterhalb des lokalen Maximums kann von einem Bereich maximalen Signals gesprochen werden.

Um eine Messung bei unterschiedlichen Wellenlängen durchführen zu können und damit eine bessere Unterscheidung zwischen Kohlenstoffpartikeln und herkömmlichen Staubpartikeln erreichen zu können, ist es sinnvoll, wenn zur Bereitstellung des Anregungslichts mindestens drei Diodenlaser vorhanden sind.

Eine Erhöhung des photoakustischen Signals wie auch des Streulichtsignals ergibt sich, wenn das Anregungslicht mehrfach durch den Messbereich leitbar ist. Dies kann durch entsprechend reflektierende Elemente erfolgen. Lichtlaufzeiten sind im Vergleich zu den Zeiten der akustischen Signalerzeugung, also der Zeit, die benötigt wird, um das Gas entsprechend zu erwärmen und das resultierende Schalldrucksignal detektieren zu können, relativ kurz. Auch im Vergleich zu den Pulsdauern oder den zeitlichen Abständen zwischen den Pulsen sind die Lichtlaufzeiten niedrig. Eine mehrfache Leitung des Anregungslichts durch den Messbereich steht daher der Bestimmung der Größenverteilung der Feinstaubpartikel durch Änderung der Pulslänge oder Pulswiederholfrequenz nicht im Weg.

Eine Möglichkeit, ein hohes photoakustisches Signal zu erreichen, ergibt sich durch Bereitstellen eines zylindrischen akustischen Resonators, welcher Mittel aufweist, das Anregungslicht derart zu leiten, dass die durch Absorption des Anregungslichts anregbare Schallwelle die zweite azimutale Resonanz der Zylinderschwingung ist. Auf diese Weise wird ein Resonanzeffekt genutzt, welcher das akustische Signal erhöht. Ein zylindrischer Resonator bietet auch eine geeignete Geometrie, damit das zu messende Gas durch den Detektor günstig durchströmen kann.

Um sich die Verstärkung des Signals klar zu machen, betrachte man einen Zylinder im Querschnitt. Wenn man durch geeignete Anregung erreicht, dass in gegenüberliegenden Bereichen des Kreises, der den Zylinderquerschnitt darstellt, Ausdehnungen erfolgen, während in den den gegenüberliegenden Bereichen benachbarten Bereichen, die sich selbst wieder gegenüber liegen, keine Ausdehnung erfolgt, erzielt man eine entsprechende Schallwelle. Durch die Anregung bilden sich somit Kreissegmente mit einem durch die Ausdehnung erhöhten Druck. Die benachbarten Kreissegmente, welche größer sind, weisen keinen erhöhten Druck, sondern normalen Druck auf. Durch diese Druckdifferenzen kann sich eine im Zylinder umlaufende Schallwelle ausbilden. Bei geeigneter Wahl der Anregungsfrequenz, also der Wiederholfrequenz oder Modulationsfrequenz der Lichtquelle kann die zweite azimutale Resonanz angeregt werden. Dadurch erfolgt eine hohe Verstärkung des photoakustischen Signals.

Ein geeignetes Mittel zur Leitung des Anregungslichts sind vier Spiegel, die in Gruppen von jeweils zwei Spiegeln im zylindrischen, akustischen Resonator gegenüber liegend angeordnet sind. Auf diese Weise kann das Licht auf einen ersten Spiegel treffen und von dort auf einen gegenüberliegenden zweiten Spiegel reflektiert werden. Dieser reflektiert das Licht zu einem benachbarten dritten Spiegel Von diesem erfolgt die Reflexion auf einen dem dritten Spiegel gegenüberliegenden vierten Spiegel. Dieser lenkt das Licht schließlich wieder zum ihm benachbarten ersten Spiegel. Damit wird in gegenüber liegenden Bereichen des Zylinders eine Erhöhung des Schalldrucks erreicht. Dies kann zu einer azimutalen Schwingung im Zylinder führen. Wählt man die Anregungsfrequenzen entsprechend, so entwickelt sich eine azimutale Schwingung bei der zweiten azimutalen Resonanz der Zylinderschwingung.

Eine alternative Ausgestaltung des Detektors ergibt sich, wenn der Detektor einen nicht vollständig von einem Gehäuse umschlossenen, akustisch offenen Messbereich aufweist. Dieser enthält Mittel zum Einbringen von Anregungslicht in den Messbereich, so dass das Anregungslicht von im Messbereich befindlichen Feinstaubpartikeln zur Erzeugung akustischer Energie absorbiert werden kann. Darüber hinaus ist mindestens ein akustischer Sensor vorzusehen, wobei Mittel vorhanden sind, um an mindestens einer Position ein lokales Maximum des Schalldrucks zu erreichen. Der mindestens eine akustische Sensor ist in der Nähe der mindestens einen Position, an der das lokale Maximum des erzeugten Schalldrucks vorliegt, angeordnet. Einzelheiten sind der DE 10 2005 030 151 zu entnehmen, welche hiermit in die Offenbarung der vorliegenden Anmeldung aufgenommen ist.

Eine geeignete Möglichkeit zum Erzeugen eines lokalen Maximums des Schalldrucks sind akustische Spiegel, insbesondere parabolische akustische Spiegel.

Von besonderer Bedeutung ist eine Messeinrichtung zur zeitaufgelösten Messung des Abgases eines Kraftfahrzeugs oder eines Motorenprüfstands mit einem photoakustischen Detektor nach einem der vorgehenden Ansprüche. Bei der Überprüfung und erst recht bei der Entwicklung von Motoren ist es nicht ausreichend, wenn komplizierte Messtechniken zur Verfügung stehen, mit denen eine verspätete Auswertung des Signals möglich ist. Vielmehr ist es wünschenswert, dass eine zeitgleiche Information über die Abgasbelastung erfolgen kann. So können Einstellungen vorgenommen werden, mit denen die Abgasbelastung reduziert werden kann. Mit der vorliegenden Erfindung können Messeinrichtungen geschaffen werden, welche in Werkstätten zu einem vertretbaren Preis angeschafft werden können. Damit kann in regelmäßigen Wartungsintervallen von Kraftfahrzeugen eine Einstellung des Motors in der Weise erfolgen, dass die Belastung mit gesundheitsschädigenden Feinstaubpartikeln reduziert werden kann.

### Ausführungsbeispiel

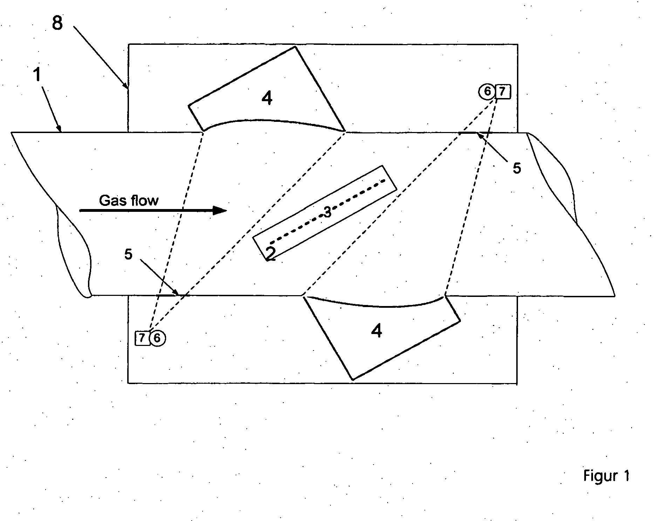

Ohne Einschränkung der Allgemeinheit wird die Erfindung anhand von einem Ausführungsbeispiel nachfolgend näher beschrieben. Dabei zeigt Figur 1 einen Messaufbau für die Messung im heißen Abgas. Der Hauptteil des photoakustischen Feinstaubdetektors ist ein Rohr 1 aus Metall oder Keramik, dessen Durchmesser darauf abgestimmt ist, dass der Einbau in ein Abgasrohr möglich ist. Die Messeinbauten sind in einem ringförmigen Gehäuse 8 eingeschlossen. In dem Rohr 1 befinden sich zwei Paare Gold beschichteter optischer Spiegel. Zum einen sind zwei plane Spiegel 2, von denen in der Zeichnung nur der obere sichtbar ist, angeordnet. Diese planen Spiegel dienen dazu, dass aus einer in der Figur nicht gezeigten Laserquelle kommende Licht durch Reflexionen mehrfach durch den Messbereich zu leiten. Dabei wird der Lichtstrahl nicht immer an derselben Stelle des Spiegels reflektiert. Vielmehr wandert der Auftreffpunkt des Lichts von Reflexion zu Reflexion jeweils ein Stückchen weiter. Es ergibt sich somit eine Linie von Auftreffpunkten 3. Die Feinstaubpartikel absorbieren das Licht des Laserpulses. Zudem wird das Licht an den Feinstaubpartikeln gestreut. Durch die Absorption und die nachfolgende Erwärmung der umgebenden Luft wird ein photoakustisches Signal erzeugt. Ferner wird ein Streulichtsignal erzeugt. Im weiteren Paar von Spiegeln, einem Paar von 60° off-axis Hohlspiegeln 4, werden sowohl die photoakustisch erzeugten Schallwellen als auch das Streulicht in Brennpunkte reflektiert.

Im Bereich der Brennpunkte befinden sich akustische Ultraschallsensoren 6 und optische Detektoren 7. Diese befinden sich außerhalb des Rohrs 1. Im Rohr 1 sind Öffnungen enthalten, durch die die von den Hohlspiegeln konzentrierten Schallwellen und das von den Hohlspiegeln konzentrierte Streulicht zu den Detektoren gelangen kann. In diesen Öffnungen befindet sich eine dünne hitzebeständige Kunststofffolie 5 aus Polyimid. Durch diese Folie wird erreicht, dass die Temperatur des durch das Rohr 1 fließenden heißen Abgases nicht zu den Detektoren gelangt. Damit können weniger aufwendige Detektoren eingesetzt werden. Zur Unterbringung der Hohlspiegel 4 und der Detektoren 6, 7 ist ein ringförmiges Gehäuse, welches das Rohr umgibt, vorhanden. Da die Detektoren trotz der hitzebeständigen Folie 5 einer Temperaturbelastung ausgesetzt sind, ist eine Kühlung durch Peltier-Elemente kombiniert mit einer Luftkühlung möglich.

Das Gas, in dem die Feinstaubpartikel gemessen werden sollen, kann durch das Rohr 1 ungehindert durchströmen. Zur Durchführung der Messung werden bei einer Wellenlänge ungefähr 100 bis 200 Pulse abgegeben. Beim Signal wird eine Mittelung vorgenommen. Zur Bestimmung der Größenverteilung der Feinstaubpartikel werden die Pulslängen von 1 µs bis 100 µs variiert. Bei der Pulswiederholfrequenz ist eine Variation von 1 kHz bis 50 kHz vorgesehen. Durch Messung bei drei verschiedenen Wellenlängen, etwa 400 nm, 700 nm und 1000 nm kann eine bessere Unterscheidung zwischen Feinstaubpartikeln und anderen absorbierenden Materialien erfolgen.

Da Schallwellen sich in Strömungsrichtung schneller ausbreiten als gegen die Strömungsrichtung, kann aus der unterschiedlichen Laufzeit des Schallsignalsauch die Strömungsgeschwindigkeit des durchströmenden Gases bestimmt werden. Um bei einer Messung im Abgas auf die verursachten Emissionen schließen zu können, reicht es nicht aus, nur die Konzentration im Abgas zu bestimmen; zusätzlich ist es erforderlich, das in der Zeiteinheit emittierte Volumen zu bestimmen. Hierzu ist die Messung der Geschwindigkeit des ausströmenden Gases erforderlich.

### Bezugszeichenliste

- 1: Rohr
- 2: plane Spiegel
- 3: Linie von Lichtauftreffpunkten
- 4: Hohlspiegel
- 5: Folie
- 6: Ultraschallsensor
- 7: optischer Detektor
- 8: ringförmiges Gehäuse

## Patentansprüche

1. Photoakustischer Detektor zur Messung der Konzentration von Feinstaubpartikeln, insbesondere von Kohlenstoffpartikeln, im Gas mit einer gepulsten Lichtquelle zur Bereitstellung von Anregungslicht, **dadurch gekennzeichnet, dass** die gepulste Lichtquelle so ausgestaltet ist, dass die Pulslänge und/oder die Pulswiederholfrequenz verändert werden kann, wobei die Pulslänge von 1 µs bis 100 µs verändert werden kann, und wobei die Pulswiederholfrequenz von 1 kHz bis 50 kHz verändert werden kann, so dass nach Kalibrierung durch Messung von Referenzproben auch eine Größenverteilung der Feinstaubpartikel bestimmt werden kann.

2. Photoakustischer Detektor nach Anspruch 1, **dadurch gekennzeichnet, dass** eine Erfassung des von den Feinstaubpartikeln gestreuten Anregungslichts möglich ist

3. Photoakustischer Detektor nach Anspruch 1 oder 2, **dadurch gekennzeichnet, dass** Mittel zur Konzentration (4) der akustischen Energie angeordnet sind, insbesondere zur Konzentration in einen Bereich, in dem die Temperatur niedriger ist als im Feinstaub enthaltenden Gas.

4. Photoakustischer Detektor nach Anspruch 3, **dadurch gekennzeichnet, dass** als Mittel zur Konzentration der akustischen Energie Reflektoren (4) einsetzbar sind, die auch zur Konzentration des gestreuten Anregungslichts nutzbar sind.

5. Photoakustischer Detektor nach einem der vorhergehenden Ansprüche, **dadurch gekennzeichnet, dass** Feinstaub direkt im durch den Detektor durchfließenden heißen Gas gemessen werden kann.

6. Photoakustischer Detektor nach einem der vorhergehenden Ansprüche, **dadurch gekennzeichnet, dass** eine Kühleinrichtung für Sensoren (6), welche den Schalldruck erfassen können, und/oder für Sensoren (7), welche das Streulicht erfassen können, vorhanden ist.

7. Photoakustischer Detektor nach einem der vorhergehenden Ansprüche, **dadurch gekennzeichnet, dass** eine thermische Entkopplung zwischen dem Bereich der Erzeugung und der Erfassung des akustischen Signals vorhanden ist.

8. Photoakustischer Detektor nach Anspruch 7, **dadurch gekennzeichnet, dass** die thermische Entkopplung durch eine schalldurchlässige und/oder lichtdurchlässige Folie (5) gewährleistet ist, welche thermisch isolierend ausgeführt ist.

9. Photoakustischer Detektor nach einem der vorhergehenden Ansprüche, **dadurch gekennzeichnet, dass** der Sensor (6) zur Erfassung des akustischen Signals ein optisches Mikrophon ist.

10. Photoakustischer Detektor nach einem der vorhergehenden Ansprüche, **dadurch gekennzeichnet, dass** die Sensoren (6, 7) zur Erfassung des akustischen und zur Erfassung des optischen Signals derart nahe zusammen angeordnet sind, dass bei einer gemeinsamen Konzentration der akustischen Energie und des gestreuten Lichts beide Sensoren im Bereich maximalen Signals angeordnet sind.

11. Photoakustischer Detektor nach einem der vorhergehenden Ansprüche, **dadurch gekennzeichnet, dass** zur Bereitstellung des Anregungslichts mindestens drei Diodenlaser vorhanden sind.

12. Photoakustischer Detektor nach einem der Ansprüche 1 bis 11, **dadurch gekennzeichnet, dass** der Detektor einen nicht vollständig von einem Gehäuse umschlossenen, akustisch offenen Messbereich aufweist, umfassend:
Mittel zum Einbringen von Anregungslicht in den Messbereich, so dass das Anregungslicht von im Messbereich befindlichen Feinstaubpartikeln zur Erzeugung akustischer Energie absorbiert werden kann;
mindestens einen akustischen Sensor (6), wobei Mittel (4) vorhanden sind, um an mindestens einer Position ein lokales Maximum des Schalldrucks zu erreichen, wobei der mindestens eine akustische Sensor (6) in der Nähe der mindestens einen Position, an der das lokale Maximum des erzeugten Schalldrucks vorliegt oder erzeugbar ist, angeordnet ist.

13. Photoakustischer Detektor nach Anspruch 12, **dadurch gekennzeichnet, dass** zum Erzeugen eines lokalen Maximums des Schalldrucks akustische Spiegel (4), insbesondere parabolische akustische Spiegel, vorhanden sind.

14. Messeinrichtung zur Messung von Abgasen eines Kraftfahrzeugs oder eines Motorenprüfstandes mit einem photoakustischen Detektor nach einem der vorhergehenden Ansprüche.

15. Verfahren zur photoakustischen Messung von Feinstaub im Gas mit gepulster Lichtquelle zur Bereitstellung von Anregungslicht, **dadurch gekennzeichnet, dass** die Pulslänge und/oder Pulswiederholfrequenz variiert wird, und so auf der Basis von Kalibrierungen die Größenverteilung der Feinstaubpartikel ermittelt wird.

## Claims

1. Photoacoustic detector for measuring the concentration of fine dust particles, in particular carbon particles, in gas, comprising a pulsed light source for the provision of excitation light, **characterized in that** the pulsed light source is configured in such a way that the pulse length and/or the pulse repetition frequency can be changed, wherein the pulse length can be changed from 1 µs to 100 µs and wherein the pulse repetition frequency can be changed from 1 kHz to 50 kHz, such that, after calibration by the measurement of reference samples, it is also possible to determine a size distribution of the fine dust particles.

2. Photoacoustic detector according to Claim 1, **characterized in that** it is possible to register the excitation light scattered by the fine dust particles.

3. Photoacoustic detector according to Claim 1 or 2, **characterized in that** means for concentrating (4) the acoustic energy are arranged, in particular for concentration in a region, in which the temperature is lower than in the gas containing the fine dust.

4. Photoacoustic detector according to Claim 3, **characterized in that** reflectors (4) are utilizable as means for concentrating the acoustic energy, which reflectors are also usable for concentrating the scattered excitation light.

5. Photoacoustic detector according to one of the preceding claims, **characterized in that** fine dust can be measured directly in the hot gas flowing through the detector.

6. Photoacoustic detector according to one of the preceding claims, **characterized in that** there is a cooling apparatus for sensors (6) which are able to register the sound pressure and/or for sensors (7) which are able to register the scattered light.

7. Photoacoustic detector according to one of the preceding claims, **characterized in that** there is thermal decoupling between the region of generation and the registration of the acoustic signal.

8. Photoacoustic detector according to Claim 7, **characterized in that** the thermal decoupling is ensured by a sound-transmissive and/or light-transmissive film (5) with a thermally insulating embodiment.

9. Photoacoustic detector according to one of the preceding claims, **characterized in that** the sensor (6) for registering the acoustic signal is an optical microphone.

10. Photoacoustic detector according to one of the preceding claims, **characterized in that** the sensors (6, 7) for registering the acoustic signal and for registering the optical signal are arranged so close together that both sensors are arranged in the region of maximum signal in the case of a common concentration of the acoustic energy and the scattered light.

11. Photoacoustic detector according to one of the preceding claims, **characterized in that** at least three diode lasers are present for providing the excitation light.

12. Photoacoustic detector according to one of Claims 1 to 11, **characterized in that** the detector has an acoustically open measurement region which is not completely surrounded by a housing, comprising:
means for introducing excitation light into the measurement region such that the excitation light can be absorbed by fine dust particles situated in the measurement region to generate acoustic energy;
at least one acoustic sensor (6), wherein means (4) are present for obtaining a local maximum of the sound pressure at at least one position, wherein the at least one acoustic sensor (6) is arranged in the vicinity of the at least one position at which the local maximum of the generated sound pressure is present or generable.

13. Photoacoustic detector according to Claim 12, **characterized in that** there are acoustic mirrors (4), in particular parabolic acoustic mirrors, for generating a local maximum of the sound pressure.

14. Measuring device for measuring exhaust gases of a motor vehicle or an engine test stand, comprising a photoacoustic detector according to one of the preceding claims.

15. Method for the photoacoustic measurement of fine dust in gas using a pulsed light source for providing excitation light, **characterized in that** the pulse length and/or pulse repetition frequency is varied, and the size distribution of the fine dust particles is thus established on the basis of calibrations.

## Revendications

1. Détecteur photoacoustique destiné à mesurer la concentration de particules de poussière fine, notamment de particules de carbone, dans un gaz, comportant une source lumineuse pulsée destinée à fournir une lumière d'excitation, **caractérisé en ce que** la source lumineuse pulsée est conçue de manière à ce que la longueur d'impulsion et/ou la fréquence de répétition d'impulsions puisse être modifiée, dans lequel la longueur d'impulsion peut être modifiée de 1 µs à 100 µs, et dans lequel la fréquence de répétition d'impulsions peut être modifiée de 1 kHz à 50 kHz, de manière à ce qu'une distribution de tailles des particules de poussière fine puisse également être déterminée après un étalonnage effectué en mesurant des échantillons de référence.

2. Détecteur photoacoustique selon la revendication 1, **caractérisé en ce qu'**une détection de la lumière d'excitation diffusée par les particules de poussière fine est possible.

3. Détecteur photoacoustique selon la revendication 1 ou 2, **caractérisé en ce qu'**il est prévu des moyens destinés à concentrer (4) l'énergie acoustique, notamment pour effectuer une concentration dans une région dans laquelle la température est plus faible que dans le gaz contenant la poussière fine.

4. Détecteur photoacoustique selon la revendication 3, **caractérisé en ce qu'**il est possible d'installer, en tant que moyens destinés à concentrer l'énergie acoustique, des réflecteurs (4) qui peuvent également être utilisés pour concentrer la lumière d'excitation diffusée.

5. Détecteur photoacoustique selon l'une quelconque des revendications précédentes, **caractérisé en ce que** la poussière fine peut être mesurée directement dans le gaz chaud passant à travers le détecteur.

6. Détecteur photoacoustique selon l'une quelconque des revendications précédentes, **caractérisé en ce qu'**il est prévu un dispositif de refroidissement destiné à des capteurs (6) qui peuvent détecter la pression acoustique et/ou destiné à des capteurs (7) qui peuvent détecter la lumière diffusée.

7. Détecteur photoacoustique selon l'une quelconque des revendications précédentes, **caractérisé en ce qu'**il est prévu un découplage thermique entre la région de génération et de détection du signal acoustique.

8. Détecteur photoacoustique selon la revendication 7, **caractérisé en ce que** le découplage thermique est assuré par une feuille (5) transparente au son et/ou transparente à la lumière, qui est réalisée de manière à ce qu'elle soit thermiquement isolante.

9. Détecteur photoacoustique selon l'une quelconque des revendications précédentes, **caractérisé en ce que** le capteur (6) destiné à détecter le signal acoustique est un microphone optique.

10. Détecteur photoacoustique selon l'une quelconque des revendications précédentes, **caractérisé en ce que** les capteurs (6, 7) destinés à détecter le signal acoustique et à détecter le signal optique sont disposés à proximité les uns des autres de manière à ce que lors d'une concentration commune de l'énergie acoustique et de la lumière diffusée, les deux capteurs soient disposés dans la région où le signal est maximal.

11. Détecteur photoacoustique selon l'une quelconque des revendications précédentes, **caractérisé en ce qu'**il est prévu au moins trois diodes laser pour fournir la lumière d'excitation.

12. Détecteur photoacoustique selon l'une quelconque des revendications 1 à 11, **caractérisé en ce que** le détecteur comporte une zone de mesure acoustiquement ouverte non entièrement entourée par un boîtier, comprenant :
des moyens destinés à introduire une lumière d'excitation dans la zone de mesure, de manière à ce que la lumière d'excitation puisse être absorbée par des particules de poussière fine se trouvant dans la zone de mesure pour générer de l'énergie acoustique ;
au moins un capteur acoustique (6), dans lequel il est prévu des moyens (4) permettant d'atteindre un maximum local de la pression acoustique à au moins une position, dans lequel l'au moins un capteur acoustique (6) est disposé à proximité de l'au moins une position à laquelle le maximum local de la pression acoustique générée est présent ou peut être généré.

13. Détecteur photoacoustique selon la revendication 12, **caractérisé en ce que**, pour générer un maximum local de la pression acoustique, il est prévu des miroirs acoustiques (4), notamment des miroirs acoustiques paraboliques.

14. Dispositif de mesure destiné à mesurer des gaz d'échappement d'un véhicule automobile ou d'un banc d'essai de moteurs, comportant un détecteur photoacoustique selon l'une quelconque des revendications précédentes.

15. Procédé de mesure photoacoustique de la poussière fine dans un gaz comportant une source lumineuse pulsée destinée à fournir une lumière d'excitation, **caractérisé en ce que** la longueur d'impulsion et/ou la fréquence de répétition d'impulsions est/sont amenée(s) à varier, et **en ce que** la distribution de tailles des particules de poussière fine est ainsi déterminée sur la base d'étalonnages.
